# FASCICULE DE BREVET EUROPEEN

(11) **EP 2 280 853 B1**
(45) Date de publication et mention de la délivrance du brevet: **15.08.2012**
(21) Numéro de dépôt: 09769458.2
(22) Date de dépôt: 03.06.2009
(51) Int. Cl.: B60T 8/00, B60T 8/17, B60T 8/32, B60T 13/74, B60T 17/22, B64C 25/42

(54) **CIRCUIT DE FREINAGE ELECTRIQUE AVEC DES ACTIONNEURS ELECTROMECANIQUES**
ELEKTRISCHE BREMSE MIT ELEKTROMECHANISCHEN AKTUATOREN
ELECTRIC BRAKE WITH ELECTROMECHANIC ACTUATORS

(30) Priorité: 04.06.2008 FR 0803092
(43) Date de publication de la demande: 09.02.2011
(73) Titulaire: Messier-Bugatti-Dowty, 78140 Velizy Villacoublay (FR)
(72) Inventeur: COLIN, Emmanuel, F-75014 Paris (FR); THIBAULT, Julien, F-91190 Gif Sur Yvette (FR); MUDRY, Stéphane, F-92130 Issy Les Moulineaux (FR)
(74) Mandataire: Parzy, Benjamin Alain
(86) Numéro de dépôt international: PCT/FR2009/000642
(87) Numéro de publication internationale: WO 2009/156617

(56) Documents cités:
- EP-A- 1 712 441
- EP-A- 1 886 887
- WO-A-01/05655
- US-A1- 2005 110 339
- US-A1- 2006 108 867
- US-B1- 6 471 015

## Description

L'invention est relative à un circuit de freinage électrique, muni de moyens pour commander les organes de blocage des poussoirs des actionneurs électromécaniques équipant un frein d'aéronef.

### ARRIERE PLAN DE L'INVENTION

Dans les aéronefs munis de freins à actionneurs électromécaniques, il est connu de réaliser la fonction de freinage de parc (c'est-à-dire l'immobilisation de l'aéronef sans que le pilote n'ait à appuyer continuellement sur les pédales de frein) en exécutant la séquence suivante :
- alimenter les actionneurs pour qu'ils appliquent chacun un effort de parc ;
- bloquer les actionneurs en position ;
- couper l'alimentation des actionneurs.

- A cet effet, les actionneurs sont munis chacun d'un organe de blocage qui permet d'immobiliser sélectivement le poussoir de l'actionneur en position. En pratique, l'organe de blocage est par exemple un frein à manque de courant qui est alimenté en mode normal pour permettre le déplacement libre du poussoir de l'actionneur sous l'action du moteur électrique de l'actionneur, mais dont l'alimentation est coupée pour bloquer le poussoir en position lors du passage en mode de parc. Ce type d'organe de blocage se contente d'une alimentation basse tension (typiquement 28V) et peut donc être commandé au moyen d'un signal à deux états faisant fonction à la fois de commande et d'alimentation de puissance.

Deux schémas de commande de l'organe de blocage sont envisageables. Selon un premier schéma, un signal de frein de parc des actionneurs est envoyé de façon indépendante pour chacun d'entre eux. Cette solution permet une grande contrôlabilité des actionneurs, puisqu'il est possible de commander chaque organe de blocage indépendamment des autres. Cependant, cette solution impose de descendre le long de l'atterrisseur concerné autant de câbles qu'il y a d'actionneurs à contrôler, ce qui grève la masse de l'ensemble. Selon un autre schéma, un seul signal de freinage de parc est envoyé simultanément à l'ensemble des actionneurs commandés par le boîtier, au moyen d'un unique câble d'alimentation descendant le long de l'atterrisseur. Ce schéma, bien que plus léger que le précédent, ne permet plus d'assurer le contrôle indépendant des actionneurs et diminue donc la contrôlabilité de ceux-ci. US 2005/ 0110339 A1 montre un circuit de freinage pour aeronef comportant les caracteristiques de la preambule de la revendication 1.

### OBJET DE L'INVENTION

L'invention vise à proposer un circuit de freinage nouveau, offrant un compromis masse/contrôlabilité intéressant pour contrôler les organes de blocage des poussoirs des actionneurs d'un frein, notamment en vue de réaliser la fonction de freinage de parc.

### BREVE DESCRIPTION DE L'INVENTION

Selon l'invention, on propose un circuit de freinage pour aéronef comportant des freins à actionneurs électromécaniques pour freiner des roues disposées à l'extrémité basse d'au moins un atterrisseur, le circuit comportant un boîtier délocalisé disposé en bas d'atterrisseur à proximité des actionneurs et relié à un certain nombre desdits actionneurs, le boîtier délocalisé recevant une alimentation par un câble d'alimentation descendant le long de l'atterrisseur, et comportant autant d'interrupteurs commandés que d'actionneurs reliés pour alimenter sélectivement des organes de blocage équipant les actionneurs reliés, les interrupteurs étant commandés indépendamment les uns des autres par des ordres logiciels transitant par un unique bus de communication descendant le long de l'atterrisseur jusqu'au boîtier délocalisé.

Ainsi, bien qu'une commande indépendante de chacun des organes de blocage des actionneurs soit assurée, la commande de ces organes de blocage ne nécessite qu'un câble d'alimentation et un bus de communication, ce quel que soit le nombre d'actionneurs concernés. On préserve ainsi l'indépendance des commandes de chacun des organes de blocage, tout en minimisant le nombre de câbles nécessaires pour assurer la commande de ces organes de blocage, et donc la masse du circuit de freinage.

Selon un mode préféré de réalisation, le boîtier reçoit, par un canal physiquement séparé du bus de communication, un ordre matériel issu d'un sélecteur manipulé par l'équipage de l'aéronef. De préférence, les ordres logiciels sont prioritaires par rapport à l'ordre matériel. Celui-ci ne commande donc les organes de blocage des actionneurs que si le contrôleur qui génère les ordres logiciels est éteint ou défaillant.

De préférence, le boîtier délocalisé comporte également des moyens de concentration de données provenant de capteurs liés aux freins ou aux roues freinées pour recueillir, formater et envoyer ces données vers l'aéronef via le bus de communication.

### BREVE DESCRIPTION DES DESSINS

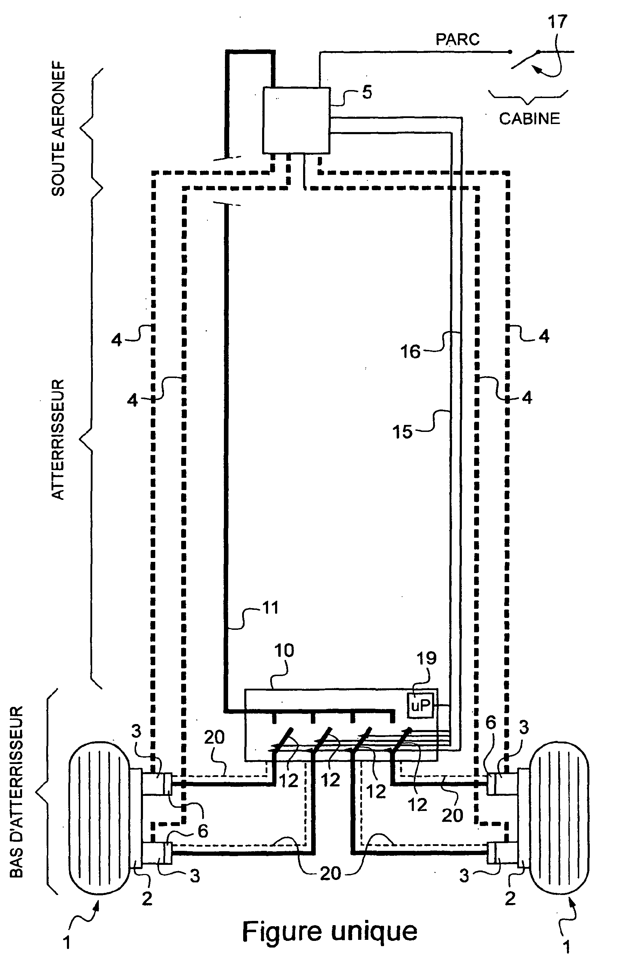

L'invention sera mieux comprise à la lumière de la description de l'unique figure montrant de façon schématique un circuit de freinage selon un mode particulier de réalisation de l'invention.

### DESCRIPTION DETAILLE DE L'INVENTION

La figure illustre le circuit de freinage de l'invention tel qu'il peut être mis en oeuvre sur un atterrisseur comportant deux roues freinées 1 dont les freins 2 comportent chacun deux actionneurs électromécanique de freinage 3. Chaque actionneur comporte un poussoir (non visible) déplaçable en regard de disques de friction disposés dans la roue associée sous l'action d'un moteur électrique associé pour exercer sur la roue un couple de freinage.

Les roues sont bien entendu portées en bas d'un atterrisseur pour assurer le contact et le déplacement de l'aéronef au sol. Les actionneurs électromécaniques 3 sont alimentés par des câbles de puissance 4 illustrés en traits épais interrompus, qui descendent le long de l'atterrisseur vers chacun des actionneurs de freinage 3 et qui proviennent d'un boîtier de contrôle 5 (appelé également EMAC pour electromechanical actuator controller) disposé ici dans une soute de l'aéronef qui reçoit l'atterrisseur lorsque celui-ci est relevé. Le boîtier de contrôle 5 reçoit une alimentation de haute puissance (typiquement 270V) du circuit de puissance de l'aéronef et distribue sélectivement la haute puissance ainsi reçue vers les moteurs électriques des actionneurs 3 au moyen des câbles de puissance 4 en fonction d'ordres de freinage reçus d'un calculateur de freinage non représenté.

Les actionneurs électromécaniques 3 sont tous équipés d'un organe de blocage 6, ici un frein à manque de courant qui lorsqu'il est alimenté, laisse libre le poussoir de l'actionneur associé de se déplacer sous l'action du moteur électrique associé, mais, lorsqu'il n'est plus alimenté, bloque le poussoir en position. Ici, les freins à manque de courant 6 se contentent d'une alimentation de basse puissance (typiquement 28V).

Selon l'invention, le circuit de freinage comporte un boîtier délocalisé 10 disposé en partie basse d'atterrisseur, à proximité des roues 1. Le boîtier délocalisé 10 reçoit une alimentation basse puissance au moyen d'un câble de basse puissance 11 illustré en traits épais qui descend le long de l'atterrisseur. Le boîtier délocalisé comporte des interrupteurs commandés 12 en nombre égal au nombre d'organes de blocage à commander, qui permettent de délivrer sélectivement la basse puissance à chacun des organes de blocage 6, indépendamment les uns des autres.

Pour commander les interrupteurs, le boîtier délocalisé 10 reçoit ici deux types d'ordre :
- des ordres logiciels, à raison d'un par interrupteur, qui sont générés par le boîtier de contrôle 5 en réponse à des ordres provenant soit du pilote, soit du calculateur de freinage, et qui sont transmis au boîtier délocalisé 10 au moyen d'un bus de communication 15 descendant le long de l'atterrisseur. Ces ordres logiciels peuvent par exemple être générés par le calculateur de freinage lorsque l'aéronef est immobilisé depuis un certain temps et que le pilote garde les pédales de freins appuyées. Le calculateur de freinage fait alors passer l'ensemble des freins en mode de parc, à l'insu du pilote, ce qui permet de couper l'alimentation des moteurs des actionneurs et ainsi éviter un échauffement inutile, tout en maintenant l'aéronef immobile. Sur la figure, on a illustré de façon schématique les quatre ordres logiciels de freinage, issus du bus de communication 15, commandant chacun l'un des interrupteurs 12 ;
- un ordre matériel unique pour tous les interrupteurs commandés 12, provenant d'un sélecteur de parc 17 disposé dans la cabine de pilotage et actionné par le pilote. L'ordre matériel est donc généré de manière indépendante du boîtier de contrôle 5. Ici, le boîtier de contrôle 5 se contente de relayer l'ordre matériel vers le boîtier délocalisé 10 au moyen d'un simple câble de transmission 16 qui descend le long de l'atterrisseur.

Le fonctionnement du boîtier délocalisé 10 est le suivant : chaque interrupteur commandé est normalement fermé, ce qui permet l'alimentation des freins à manque de courant constituant les organes de blocage 6, autorisant ainsi le libre mouvement de chacun des poussoirs des actionneurs sous l'action du moteur associé. En cas de survenue d'un ordre logiciel, l'interrupteur 12 correspondant s'ouvre, ce qui coupe l'alimentation du frein à manque de courant correspondant, ce qui provoque donc l'immobilisation du poussoir associé. En fonctionnement normal, et notamment lorsque l'aéronef est sous tension et que le boîtier de contrôle 5 fonctionne normalement, l'ordre matériel n'a aucun effet direct sur les interrupteurs. Ainsi, les ordres logiciels ont priorité sur l'ordre matériel, quand bien même le pilote manipulerait le sélecteur de parc 17. Ce n'est qu'en cas de défaillance du boîtier de contrôle 5, ou si celui-ci n'est plus alimenté pour une raison quelconque, que la survenue d'un ordre matériel provoque l'ouverture de tous les interrupteurs commandés, entraînant l'immobilisation de tous les poussoirs associés.

Ainsi même en cas de problème dans la génération des ordres logiciels, le pilote garde toujours la possibilité de forcer le circuit de freinage de sorte que tous les poussoirs des actionneurs peuvent être immobilisés .

Le circuit de freinage de l'invention assure donc la fonction de parc en ne faisant appel qu'à un boîtier délocalisé 10, à un bus de communication 15 et à un câble de transmission 16, ce quel que soit le nombre de freins et d'actionneurs à gérer en bas d'atterrisseur. Le circuit de freinage de l'invention permet donc d'assurer la commande indépendant des actionneurs, tout en limitant le nombre de câbles descendant le long de l'atterrisseur.

Il est extrêmement avantageux de profiter de la présence du boîtier délocalisé 10 pour lui faire jouer d'autres rôles. Par exemple, le boîtier délocalisé 10 peut servir de concentrateur local de données. Des données telles que la vitesse de rotation des roues, la position angulaire des moteurs peuvent être remontées vers le boîtier délocalisé 10 par des transmissions filaires 20 illustrées en traits fins interrompus, le boîtier délocalisé 10 étant équipé de moyens de traitement (par exemple un microcontrôleur 19 pour recueillir, formater, et enfin transmettre ces données vers le boîtier de contrôle 5 au moyen du bus de communication 15. Ces moyens de traitement sont alimentés par le câble de basse puissance 11 qui parvient au boîtier délocalisé 10.

On met donc en commun la structure mécanique du boîtier, l'alimentation de basse puissance et le bus de communication pour remplir, au moyen des mêmes équipements, la fonction de commande des organes de blocage et la fonction de concentration de données. Le circuit de freinage de l'invention permet donc une économie substantielle de moyens pour assurer plusieurs fonctions.

L'invention n'est pas limitée à ce qui vient d'être décrit, mais, au contraire, englobe toute variante entrant dans le cadre défini par les revendications.

En particulier, l'alimentation basse puissance 11 du boîtier délocalisé 10, qui ici provient directement du circuit de basse puissance de l'aéronef, peut en variante transiter par le boîtier de contrôle 5. En outre, le boîtier délocalisé 10 peut être équipé d'une source locale de puissance, par exemple de type capacitif, qui est chargée en service par l'alimentation basse puissance, mais qui peut débiter en remplacement de l'alimentation basse puissance si celle-ci venait à défaillir ou si le câble d'alimentation était sectionné. Il suffit que la source capacitive soit capable de débiter pendant un temps suffisant, en pratique court, pour commander le blocage des poussoirs des actionneurs lorsque celui-ci est requis, ou prolonger le déblocage le cas échéant. En variante, la source locale de puissance peut être installée dans le boîtier de contrôle 5.

En outre, pour un même atterrisseur, on peut prévoir plusieurs boîtiers délocalisés. Par exemple, pour un atterrisseur comportant un balancier qui porte quatre roues, on pourra prévoir un boîtier délocalisé pour les roues avant, et un boîtier délocalisé pour les roues arrière. On pourra également prévoir, par souci de sécurité, une redondance du bus de communication et du câble de transmission de l'ordre matériel de parc sur chacun des boîtiers.

Bien que l'on ait indiqué dans l'exemple illustré que le boîtier de contrôle 5 se contente de relayer l'ordre matériel de parc, il peut également en faire l'acquisition, pour assurer une redondance, ou encore pour élaborer des ordres logiciels de commande des organes de blocage.

Enfin, bien que l'on ait expliqué comment l'invention permettait d'assurer la commande des organes de blocage des poussoirs des actionneurs, et comment cette commande permettait la mise en oeuvre du freinage de parc, l'invention n'est bien sûr pas limitée à cette application. On pourra commander les organes de blocage dans d'autres circonstances que pour assurer le freinage de parc, par exemple lors d'un essai de fonctionnement, ou encore pour assurer un blocage de sécurité des poussoirs lorsque les atterrisseurs sont relevés et en soute.

## Revendications

1. Circuit de freinage pour aéronef comportant des freins à actionneurs électromécaniques (3) pour freiner des roues disposées à l'extrémité basse d'au moins un atterrisseur, comportant un boîtier délocalisé (10) apte d'être disposé en bas d'atterrisseur à proximité des actionneurs et relié à un certain nombre desdits actionneurs, le boîtier délocalisé recevant une alimentation (11) par un câble d'alimentation apte à descendre le long de l'atterrisseur, **caractérisé en ce que** le boîtier délocalisé comporte autant d'interrupteurs commandés (12) que d'actionneurs reliés pour alimenter sélectivement des organes de blocage (6) équipant les actionneurs reliés, les interrupteurs étant commandés indépendamment les uns des autres par des ordres logiciels de parc générés par un boîtier de contrôle (5) et transitant par un unique bus de communication (15) apte à descendre le long de l'atterrisseur jusqu'au boîtier délocalisé.

2. Circuit de freinage pour aéronef selon la revendication 1, comportant un câble de transmission (16) indépendant du bus de communication (15) apte à descendre le long de l'atterrisseur pour transmettre au boîtier délocalisé un ordre matériel de parc généré par un sélecteur de parc (17) manipulé par le pilote de l'aéronef, indépendamment du boîtier de contrôle (5).

3. Circuit de freinage selon la revendication 1, dans lequel le boîtier délocalisé (10) comporte également des moyens de traitement (19) de données provenant de capteurs liés aux freins ou aux roues freinées pour recueillir, formater et envoyer ces données vers l'aéronef via le bus de communication (15).

4. Circuit de freinage selon la revendication 1, dans lequel le boîtier délocalisé (10) est alimenté directement par le réseau de puissance de l'aéronef.

5. Circuit de freinage selon la revendication 1, dans lequel le boîtier délocalisé (10) est alimenté via le boîtier de contrôle (5).

6. Circuit de freinage selon la revendication 1, dans lequel le boîtier délocalisé (10) ou le boîtier de contrôle (5) comporte une source locale de puissance.

## Claims

1. An aircraft braking circuit having brakes with electromechanical actuators (3) for braking wheels located at the bottom end of at least one undercarriage, the circuit including a remote unit (10) adapted to be located at the bottom of the undercarriage close to the actuators and connected to a certain number of said actuators, the remote unit receiving a power supply (11) via a power supply cable adapted to go down along the undercarriage, **characterized in that** the remote unit has as many controlled switches (12) as connected actuators for selectively powering blocking members (6) fitted to the connected actuators, the switches being controlled independently of one another by software parking orders generated by a control unit (5) and passing via a single communications bus (15) adapted to go down along the undercarriage to the remote unit.

2. An aircraft braking circuit according to claim 1, including a transmission cable (16) independent from the communications bus (15) adapted to go down along the undercarriage to transmit a hardware parking order to the remote unit, which order is generated by a parking selector (17) operated by the pilot of the aircraft, independently of the control unit (5).

3. A braking circuit according to claim 1, wherein the remote unit (10) also includes data processor means (19) for processing data coming from sensors associated with the brakes or the braked wheels in order to collect, format, and relay said data to the aircraft via the communications bus (15).

4. A braking circuit according to claim 1, wherein the remote unit (10) is powered directly by the power supply network of the aircraft.

5. A braking circuit according to claim 1, wherein the remote unit (10) is powered via the control unit (5).

6. A braking circuit according to claim 1, wherein the remote unit (10) or the control unit (5) include a local power supply.

## Patentansprüche

1. Bremskreis für ein Luftfahrzeug, umfassend Bremsen mit elektromagnetischen Stellgliedern (3) zur Bremsung der Räder, die am unteren Ende mindestens eines Fahrgestells angeordnet sind, umfassend einen ausgelagerten Schaltkasten (10), der unten am Fahrgestell in der Nähe der Stellglieder angeordnet sein kann und mit einer bestimmten Anzahl der besagten Stellglieder verbunden ist, wobei der ausgelagerte Schaltkasten über ein Netzkabel gespeist wird, das am Fahrgestell entlanglaufen kann, **dadurch gekennzeichnet, dass** der ausgelagerte Schaltkasten so viele gesteuerte Schalter (12) umfasst wie Stellglieder angeschlossen sind, um die Sperrorgane (6), mit denen die angeschlossenen Stellglieder ausgestattet sind, selektiv zu speisen, wobei die Schalter unabhängig voneinander über Softwarebefehle zum Parken gesteuert werden, die von einer Steuereinheit (5) erzeugt werden und über einen einzigen Kommunikationsbus (15) befördert werden, der am Fahrgestell entlang bis zum ausgelagerten Schaltkasten laufen kann.

2. Bremskreis für ein Luftfahrzeug nach Anspruch 1, umfassend ein Übertragungskabel (16), das vom Kommunikationsbus (15) unabhängig ist und am Fahrgestell entlanglaufen kann, um an den ausgelagerten Schaltkasten einen Hardwarebefehl zum Parken zu übertragen, der von einem Schalter für die Parkposition (17) erzeugt wird und vom Piloten des Luftfahrzeugs unabhängig von der Steuereinheit (5) betätigt wird,.

3. Bremskreis nach Anspruch 1, bei dem der ausgelagerte Schaltkasten (10) ebenfalls Mittel (19) zur Verarbeitung von Daten aufweist, die von Sensoren stammen, die an den Bremsen oder an den gebremsten Rädern angebracht sind, zum Aufnehmen, Formatieren und Senden dieser Daten an das Luftfahrzeug über den Kommunikationsbus (15).

4. Bremskreis nach Anspruch I, bei dem der ausgelagerte Schaltkasten (10) direkt über die Netzspannung des Luftfahrzeugs gespeist wird.

5. Bremskreis nach Anspruch 1, bei dem der ausgelagerte Schaltkasten (10) über die Steuereinheit (5) gespeist wird.

6. Bremskreis nach Anspruch 1, bei dem der ausgelagerte Schaltkasten (10) oder die Steuereinheit (5) eine lokale Spannungsquelle aufweisen.
